# EUROPÄISCHE PATENTSCHRIFT

(11) **EP 1 224 344 B1**
(45) Veröffentlichungstag und Bekanntmachung des Hinweises auf die Patenterteilung: **17.11.2004**
(21) Anmeldenummer: 00978961.1
(22) Anmeldetag: 29.09.2000
(51) Int. Cl.: D01F 2/00, C08J 5/18, C08L 1/02

(54) **VERFAHREN UND VORRICHTUNG ZUR REGELUNG DER ZUSAMMENSETZUNG VON LÖSUNG(EN)**
METHOD AND DEVICE FOR REGULATING THE COMPOSITION OF SOLUTION(S)
PROCEDE ET DISPOSITIF POUR REGULER LA COMPOSITION D'AU MOINS UNE SOLUTION

(30) Priorität: 06.10.1999 DE 19947908; 15.10.1999 DE 19949727
(43) Veröffentlichungstag der Anmeldung: 24.07.2002
(73) Patentinhaber: Zimmer AG, 60388 Frankfurt am Main (DE)
(72) Erfinder: NIEMZ, Frank-Günter, 07407 Rudolstadt (DE); MEYER, Wilhelm, 07407 Rudolstadt (DE); MAINZER-ALTHOF, Tanja, 63571 Gelnhausen (DE)
(74) Vertreter: Brandenburg, Thomas, Dr.
(86) Internationale Anmeldenummer: PCT/DE2000/003409
(87) Internationale Veröffentlichungsnummer: WO 2001/025512

(56) Entgegenhaltungen:
- EP-A- 0 254 803
- WO-A-94/28212
- GB-A- 2 217 848

## Beschreibung

Die Erfindung betrifft ein Verfahren zur Regelung der Zusammensetzung von Lösung(en) bei der Herstellung von cellulosischen Formkörpern, bei dem man (a) Zellstoff und ein wasserhaltiges Aminoxid unter Bildung einer Suspension mischt, (b) aus der Suspension unter Wasserverdampfung eine Celluloselösung bildet, (c) die Celluloselösung durch einen Luftspalt in ein Fällbad extrudiert, das eine wässrige Aminoxidlösung enthält, und dort zu Formkörpern koaguliert, (d) die Formkörper durch eine wässrige Waschlösung leitet, in der restliches Aminoxid aus den Formkörpern ausgewaschen wird, und (e) wässrige Aminoxidlösungen aus den Stufen (c) und/oder (d) nach Konzentrierung in die Stufe (a) zurückführt, wobei eine nicht optische Eigenschaft der Lösungen gemessen und aufgrund der Meßwerte die Zusammensetzung der Lösungen geregelt werden.

Die Erfindung betrifft auch eine Vorrichtung zur Durchführung dieses Verfahrens mit einem mit Dosierorganen bestückten Anmaischeapparat, einer an den Anmaischeapparat angeschlossenen Löse- und Eindampfungseinrichtung, einer an die Löse- und Eindampfungseinrichtung über eine Leitung angeschlossenen Extrusionseinrichtung mit einem nachgeschalteten Fällbad, wenigstens einem Waschbad, das eine stark verdünnte, wässrige Aminoxidlösung enthält, sowie Einrichtungen zur Messung einer Eigenschaft der Lösung(en) zwecks Überwachung ihrer Zusammensetzung. Unter die Eigenschaft der Celluloselösung soll im Rahmen der vorliegenden Erfindung auch ein messbares physikalisches Verhalten der Lösung fallen.

Die Eigenschaften der nach dem Aminoxidverfahren hergestellten cellulosischen Formkörper, insbesondere die textilphysikalischen Eigenschaften der ersponnenen Fasern und Filamente hängen in hohem Maße von der Zusammensetzung der Extrusionslösung ab. Zur Einhaltung optimaler Eigenschaften ist es daher erwünscht, die Zusammensetzung der Lösung zu überwachen und Schwankungen in engen Grenzen zu halten. Bei einem kontinuierlichen Verfahren wie dem vorliegenden Aminoxidverfahren ist die Prozessüberwachung für eine wirtschaftliche Fahrweise von Bedeutung. Es ist daher wichtig, auch die Konzentrationen der wässrigen Aminoxidiösungen in den Stufen (c), (d) und (e) zu messen und die Lösungszusammensetzungen zu regeln.

Aus WO 94/28212 ist es bekannt, von Zeit zu Zeit eine Probe der dem Extrusionsapparat zufließenden Spinnlösung zu entnehmen und ihren Brechungsindex zu messen. Dieser soll bei 60°C in dem Bereich von 1,489 bis 1,491 liegen, damit Extrusionsprodukte mit zufriedenstellenden Eigenschaften erhalten werden. Es ist ferner bekannt, den Brechungsindex der wässrigen Aminoxidlösungen innerhalb bestimmter Grenzen zu halten. So soll der Brechungsindex der wässrigen Aminoxidlösung für das Fällbad bei 60°C zwischen 1,3644 und 1,3708 liegen, während für die konzentrierte Aminoxidlösung für die Bildung der Zellstoffsuspension der Brechungsimdex in dem Bereich von 1,4620 bis 1,4628 liegen kann, ohne daß Dosierorgane betätigt oder die Verdampferbedingungen verändert werden müssen. Die Überwachung des Brechungsindex der Lösung in einem mehr oder weniger breiten Bereich erlaubt keine exakte Regelung der Zusammensetzung der Lösung. Außerdem versagt dieses Verfahren bei Lösungen mit starker Lichtabsorption und/oder -streuung.

Die EP 0 254 803 offenbart ein Verfahren zur Herstellung einer wässrigen, reinen N-Methylmorpholin-N-Oxid-Lösung durch Umsetzung von Methylmorpholin mit einem wässrigen Wasserstoffperoxid, wobei man Mischungen von Methylmorpholin mit Wasser destilliert, das Methylmorpholin-Wasser-Azeotrop bei Temperaturen von 60° bis 100 °C mit einer wässrigen Wasserstoffperoxidlösung umsetzt und die Reaktionslösung anschließend auf den gewünschten Gehalt N-Methylmorpholin-N-Oxid auf konzentriert. Die Konzentration des so erhaltenen Entproduktes kann mit Hilfe des Brechungsindexes oder einer Dichtenmessung überwacht werden, wobei das Endprodukt nur leicht gelblich gefärbt ist und als Verunreinigungen kaum noch nachzuweisende Mengen an Peroxid, Methylmorpholin und Carboxylgruppen enthalten kann.

Der vorliegenden Erfindung liegt die Aufgabe zugrunde, ein Verfahren zur Herstellung von cellulosischen Formkörpern nach dem Aminoxidverfahren zu schaffen, bei dem die Zusammensetzung der Spinnlösung genau überwacht werden kann. Die Regelung der Zusammensetzung soll genauer erfolgen als dies aufgrund eines Brechungs-indexbereiches möglich ist. Darüber hinaus soll ein Verfahren zur Herstellung von cellulosischen Formkörpern nach dem Aminoxidverfahren geschaffen werden, bei dem die Zusammensetzung der Lösung mit möglichst geringer Verzögerung geregelt wird, damit auftretende Schwankungen in der Zusammensetzung in engen Grenzen gehalten werden können. Insbesondere soll auch ein Verfahren zur Herstellung cellulosischer Formkörper nach dem Aminoxidverfahren geschaffen werden, bei dem die Zusammensetzungen der verschiedenen im Verfahrensverlauf auftretenden Lösungen auch dann geregelt werden können, wenn die Brechungsindexmessung unbrauchbar ist, weil die Lösungen das Licht zu stark absorbieren oder streuen. Schließlich soll auch eine Vorrichtung zur Durchführung des Verfahrens geschaffen werden, durch die Änderungen der Zusammensetzung von Lösungen des Aminoxidverfahrens, und zwar sowohl Spinnlösungen als auch cellulosefreien, wässrigen Aminoxidlösungen in engen Grenzen gehalten oder eliminiert werden können. Weitere Vorteile der Erfindung ergeben sich aus der folgenden Beschreibung.

Diese Aufgabe wird bei dem eingangs genannten Verfahren erfindungsgemäß dadurch gelöst, daß man eine nicht-optische Eigenschaft wenigstens einer der genannten Lösungen mißt und die Abweichung(en) des Meßwerts bzw. der Meßwerte von einem vorgegebenen Sollwert zur Regelung der Zusammensetzung(en) dieser Lösung(en) benutzt. Anders als das oben genannte Verfahren mit Messung des Brechungsindexes wird erfindungsgemäß ein enger Toleranzbereich der Meßgröße vorgegeben. Abweichungen des Meßwertes von einem bestimmten Sollwert lösen unmittelbar einen Eingriff an den Stellgliedern des Regelkreises aus. Es wird daher eine striktere Regelung der Lösungszusammensetzung erreicht als sie möglich ist, wenn die Regelung erst aktiviert wird, wenn der Meßwert einen vorgegebenen Toleranzbereich verläßt. Die Messung einer nicht-optischen Eigenschaft der Lösungen setzt zudem nicht die Durchsichtigkeit der Lösungen für das Licht der benutzten Wellenlänge voraus. Daher können auch Spinnlösungen, die definierte Anteile an Zusatzstoffen, wie z.B. Titandioxid, Farb- oder Füllstoffe enthalten, und im Prozess anfallende Aminoxidlösungen, die durch Verunreinigungen stark gefärbt sind, überwacht und in Bezug auf ihre Konzentration geregelt werden.

Die zu messende nicht-optische Eigenschaft der Lösung ist die Dielektrizitätskonstante, die (elektrische) Leitfähigkeit, die Mikrowellenintensität und -geschwindigkeit, die Dichte, der Wassergehalt oder die Ultraschallgeschwindigkeit. Durchsichtige und undurchsichtige Lösungen im Prozess können mittels Messungen der gleichen Eigenschaft überwacht werden, wodurch der Meß- und Regelaufwand minimiert werden kann. Der Wassergehalt kann nach Karl-Fischer bestimmt werden.

Nach der bevorzugten Ausführungsform des Verfahrens mißt man die Temperatur der Lösung bei oder kurz vor oder nach der Messung einer der genannten Lösungseigenschaften und kompensiert man den Meßwert aufgrund der gemessenen Temperatur. Da die Temperatur der Lösung variieren kann, müssen die Meßwerte auf eine Bezugstemperatur umgerechnet werden, bei der der Meßwert der betreffenden Eigenschaft der Lösung von Soll-Zusammensetzung bekannt ist, mit dem der aktuelle Meßwert zu vergleichen ist. Die Bezugstemperatur, auf die die Meßwerte umgerechnet werden, ist beispielsweise 50°C oder 60°C.

Vorzugsweise mißt man die Eigenschaft der Lösung in-line. Die in-line-Messungen erlauben nicht nur eine schnelle Ermittlung der Lösungszusammensetzung bei geringem Strömungswiderstand, sondern sie vermeiden bei Spinnlösungen auch das durch die Zersetzlichkeit der Lösung bestehende Sicherheitsrisiko, das beispielsweise in Toträumen der Leitung (z.B. Probenahmestutzen) durch das mögliche Einsetzen von run-away-Reaktionen besteht.

Bei einer Ausführungsform des erfindungsgemäßen Verfahrens greift man zur Regelung der Lösungszusammensetzung in die Dosierung der Komponenten in Stufe (a), (b) bzw. (d) ein. Wird z.B. eine Änderung der Zusammensetzung der Spinnlösung aufgrund der Eigenschaftsmessung festgestellt, ist ein Eingriff in die Dosierung der Komponenten Zellstoff und/oder Lösungsmittel NMMO/H₂O notwendig. Zur Korrektur der Zusammensetzung der Fällbadlösung kann es erforderlich werden, in die Dosierung der dem Fällbad zulaufenden Waschlösung einzugreifen oder die Wasserdosierung zur Waschlösung zu verändern.

Bei einer anderen Ausführungsform des Verfahrens greift man zur Regelung der Lösungszusammensetzung in die Betriebsbedingungen der Stufe (b) oder/und der Stufe (e) ein. Ergeben die Messungen eine unerwünschte Verschiebung des Verhältnisses NMMO/H₂O der Spinnlösung, so kann dies in der Stufe (b) korrigiert werden, indem die Wasserverdampfung in dieser Stufe gedrosselt oder verstärkt wird. Ebenso kann die Konzentration der in die Stufe (a) zurückzuführenden wässrigen Aminoxidlösung durch Eingriff in die Konzentrierungs- bzw. Eindampfungsstufe geregelt werden.

Die Aufgabe wird ferner bei der eingangs genannten Vorrichtung erfindungsgemäß dadurch gelöst, daß in der Leitung oder einem Behälter, die bzw. der die zu überwachende Lösung enthält, ein Gerät zur Messung einer nicht-optischen Eigenschaft der Lösung angeordnet ist, und daß das Meßgerät zusammen mit strömungsmäßig vorgeschalteten Dosierorganen oder Eindampfeinrichtungen Regelkreise zur Regelung der Lösungszusammensetzung bildet. Das Meßgerät liefert einen Meßwert der Lösung, wie z.B. ihre Dielektrizitätskonstante oder Dichte, der zu Signalen für die Verstellung von Stellorganen, wie z.B. der Änderung der Geschwindigkeit von Dosierorganen oder der Änderung der Wärmeleistung der Eindampfapparate umgeformt wird.

Vorzugsweise umfaßt das Meßgerät ein Gerät zur Messung der Lösungstemperatur und eine Temperaturkompensation des von dem Meßgerät gelieferten Meßwerts. Das Meßgerät liefert dann schon temperaturkompensierte Meßwerte, so daß ein unmittelbarer Vergleich mit den vorgegebenen, auf eine bestimmte Temperatur bezogenen Werten der Lösungen von Soll-Zusammensetzung möglich ist.

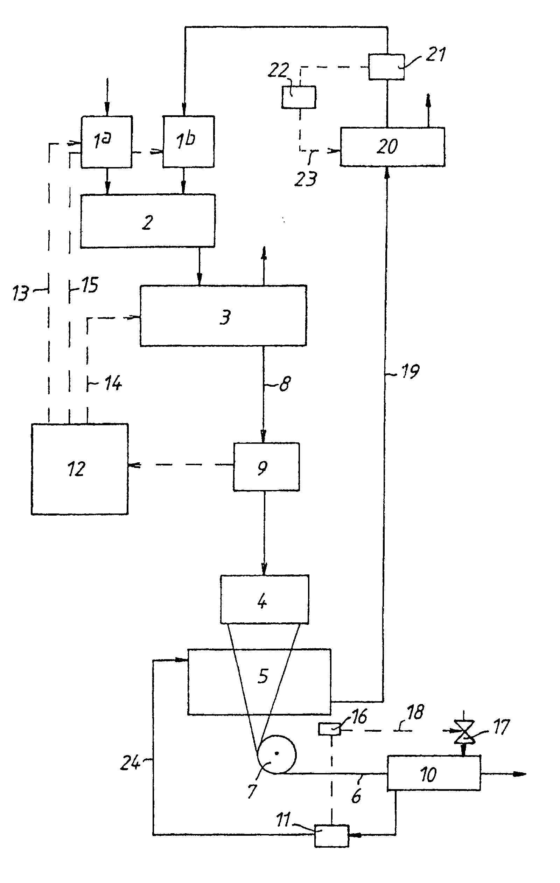

Die Erfindung wird nachfolgend an Hand der Zeichnung näher erläutert, die das schematische Fließbild einer Ausführungsform der erfindungsgemäßen Vorrichtung zeigt.

Wasserhaltiger Zellstoff und ein Gemisch aus N-Methylmorpholin-N-oxid (NMMO) und Wasser werden durch die Dosierorgane 1^{a} bzw. 1^{b} in einen kontinuierlich arbeitenden Anmaischeapparat 2 eingespeist. Der Apparat 2 kann ein Mehrwellenapparat sein, wie er in DE-C-198 37 210.8 beschrieben ist. Dem Apparat 2 ist eine Löse- und Eindampfungseinrichtung 3 nachgeschaltet, in der die in Apparat 2 gebildete Suspension aus Zellstoff und NMMO/H₂O durch Wärmezufuhr und Unterdruck unter Wasserverdampfung in eine Lösung überführt wird. Ein geeignetes Verfahren hierzu ist aus DE-A-44 41 468.8 bekannt. An die Löseeinrichtung 3 schließt sich über eine Leitung 8 ein Extrusionswerkzeug 4 an, durch das die Spinnlösung über einen Luftspalt in ein Fällbad 5 extrudiert wird. Je nach Art der Beschaffenheit des Extrusionswerkzeugs und der folgenden Operationen können Fasern, Filamente, Folien oder andere Formkörper erhalten werden. Der so erhaltene Formkörper 6 wird über ein Abzugsorgan 7 einer Waschstufe 10 zugeführt, in der restliches Aminoxid aus dem Formkörper 6 ausgewaschen wird.

Erfindungsgemäß ist in der Leitung 8 zwischen der Löseeinrichtung 3 und dem Extrusionswerkzeug 4 ein Meßgerät 9 zur Messung einer nicht-optischen Eigenschaft, z.B. der Dielektrizitätskonstanten oder der Dichte der Lösung installiert. Das Meßgerät 9 liefert ein temperaturkorrigiertes Signal an einen Mikroprozessor 12, der Abweichungen vom Sollwert der Lösung feststellt und Stellsignale über die Signalleitung 13 an das Dosierorgan 1^{a} für den Zellstoff, die Signalleitung 15 an das Dosierorgan 1^{b} für das Lösungsmittelgemisch und die Signalleitung 14 an die Löse- und Eindampfungseinrichtung 2 gibt.

Wie aus der Zeichnung ersichtlich, wird die Waschlösung aus der Waschstufe 10 über eine Leitung 24 dem Fällbadbehälter 5 zugeführt. Ein Meßgerät 11 in dieser Leitung stellt die Zusammensetzung der verbrauchten Waschlösung in der Leitung 24 fest und regelt über die Signalleitung 18 mit dem Mikroprozessor 16 das Ventil 17 für die Wasserzugabe zur Waschstufe 10. Die verbrauchte Fällbadlösung wird durch eine Leitung 19, die auch Reinigungseinrichtungen (nicht dargestellt) enthält, einer Eindampfstufe 20 zugeführt, in der die Lösung auf eine vorgegebene Aminoxid-Konzentration eingedampft wird. Die Konzentration der eingedampften Lösung wird durch Messung einer Eigenschaft mittels des Meßgeräts 21 und Ist-Soll-Vergleich durch den Prozessor 22 in ein Stellsignal umgeformt, das über die Signalleitung 23 zur Einstellung der Eindampfbedingungen der Eindampfstufe 20 dient.

## Patentansprüche

1. Verfahren zur Regelung der Zusammensetzung von Lösung (en) bei der Herstellung von cellulosischen Formkörpern, bei dem man
(a) Zellstoff und ein wasserhaltiges Aminoxid unter Bildung einer Suspension mischt,
(b) aus der Suspension unter Wasserverdampfung eine Celluloselösung bildet,
(c) die Celluloselösung durch einen Luftspalt in ein Fällbad extrudiert, das eine wässrige Aminoxidlösung enthält, und dort zu Formkörpern koaguliert,
(d) die Formkörper durch eine wässrige Waschlösung leitet, in der restliches Aminoxid aus den Formkörpern ausgewaschen wird, und
(e) wässrige Aminoxidlösungen aus den Stufen (c) und / oder (d) nach Konzentrierung in die Stufe (a) zurückführt, wobei eine Eigenschaft der Lösungen gemessen und aufgrund des Messwertes die Zusammensetzung der Lösungen geregelt wird, **dadurch gekennzeichnet, daß** man wenigstens eine nicht optische Eigenschaft der genannten Lösungen misst und die Abweichung (en) des Messwertes bzw. der Messwerte von einem vorgegebenen Sollwert zur Regelung der Zusammensetzung (en) dieser Lösung (en) benutzt, wobei man die Eigenschaft der Lösung unter der Dielektrizitätskonstanten, der induktiven Leitfähigkeit, der Mikrowellenabsorption, der Dichte, dem Wassergehalt und der Ultraschallgeschwindigkeit auswählt.

2. Verfahren nach Anspruch 1 , **dadurch gekennzeichnet, daß** man die Temperatur der Lösung bei oder kurz vor oder nach der Messung der Eigenschaft mißt und den Meßwert der Eigenschaft aufgrund der Meßtemperatur kompensiert.

3. Verfahren nach einem der Ansprüche 1 bis 2, **dadurch gekennzeichnet, daß** man die Eigenschaft in-line mißt.

4. Verfahren nach einem der Ansprüche 1 bis 3, **dadurch gekennzeichnet, daß** man zur Regelung der Lösungszusammensetzung in die Dosierung der Komponenten in Stufe (a), (c) oder (d) eingreift.

5. Verfahren nach einem der Ansprüche 1 bis 4, **dadurch gekennzeichnet, daß** man zur Regelung der Lösungszusammensetzung in die Betriebsbedingungen der Stufe (b) und/oder (e) eingreift.

6. Vorrichtung zur Durchführung des Verfahrens nach einem der Ansprüche 1 bis 5, mit
einem mit Dosierorganen (1^{a},1^{b}) bestückten Anmaischeapparat (2),
einer an den Anmaischeapparat (2) angeschlossenen Löse- und Eindampfeinrichtung (3),
einer an die Löse- und Eindampfeinrichtung (3) über eine Leitung (8) angeschlossenen Extrusionseinrichtung (4) mit einem nachgeschalteten Fällbad (5),
wenigstens einem Waschbad, das eine verdünnte wässrige Aminoxidlösung enthält, und
Einrichtungen zur Messung einer Eigenschaft der Lösung(en) zwecks Überwachung ihrer Zusammensetzung,
**dadurch gekennzeichnet, daß** in der Leitung (8,19,24) oder einem Behälter, die bzw. der die zu überwachende Lösung enthält, ein Gerät (9,21,11) zur Messung einer nicht-optischen Eigenschaft der Lösung angeordnet ist, und daß das Meßgerät zusammen mit vorgeschalteten Dosierorganen (1^{a},1^{b}; 17) oder Eindampfeinrichtungen (3;20) Regelkreise (13,14,15; 18; 23) für die Regelung der Lösungszusammensetzung bildet.

7. Vorrichtung nach Anspruch 6, **dadurch gekennzeichnet, daß** das Meßgerät (9, 11, 21) ein Gerät zur Messung der Lösungstemperatur und eine Temperaturkompensation des Meßwerts des Geräts umfaßt.

## Claims

1. Process for controlling the composition of solution(s) for the manufacture of cellulosic shaped bodies, comprising
(a) mixing cellulose pulp and a water containing aminoxide with formation of a suspension,
(b) forming a cellulose solution from the suspension by evaporation of water,
(c) extruding the cellulose solution through an air gap into an precipitation bath, containing an aqueous aminoxide solution, and the cellulose solution coagulates there to form shaped bodies,
(d) conducting the shaped bodies through an aqueous washing solution in which remaining aminoxide is washed out from the shaped bodies,
(e) returning aqueous aminoxide solution from stage (c)and/or (d) after concentration to stage (a),in which a property of the solutions is measured and according to the measured value the composition of the solutions is controlled,
**characterized in that**,
at least one non-optical property of one of the said solutions is measured and the deviation(s) from the measured value respectively values from a predetermined reference value is used for the regulation of the composition(s) of these solutions, in which the property of the solution is chosen from the relative permittivity, the inductive conductivity, microwave absorption, the density, the water content and the ultrasonic speed.

2. Process according to claim 1, **characterized in that**, the temperature of the solution is measured at or shortly before or after the measurement of the property and the measured value of the property is compensated on the basis of the measured temperature.

3. Process according to claims 1 to 2, **characterized in that**, the property is measured in-line.

4. Process according to claims 1 to 3, **characterized in that**, recourse is made to the regulation of the composition of the solution in the metering of the components in stage (a),(c) or (d).

5. Process according to claims 1 to 4, **characterized in that**, recourse is made to the operating conditions in stage (b) and /or (e) for the regulation of the composition of the solutions.

6. Device for carrying out the process according to any of the claims 1 to 5, with a pulping device (2) equipped with metering elements (1^{a}, 1^{b}),
the pulping device (2) connected to a dissolving and evaporation device (3),
an extrusion device (4) connected via line (8) to the dissolving and evaporation device (3), with a downstream precipitation bath (5),
at least one washing bath, containing a diluted aqueous aminoxide solution, and
devices for the measurement of a property of the solution(s) to control their composition,
**characterized in that**, that in the line (8, 19, 24) or in a container, containing the solution to be controlled, a device (9, 21, 11) for the measurement of a non-optical property of the solution is arranged, and that the measuring device together with upstream metering elements (1^{a}, 1^{b}; 17) or evaporation devices (3; 20) forms regulating circuits (13, 14, 15; 18; 23) for the regulation of the composition of the solution.

7. Device according to claim 6, **characterized in that**, the measuring device (9, 11, 21) comprises a device for measuring the temperature of the solution and a temperature compensation of the measured value of the measuring device.

## Revendications

1. Procédé pour réguler la composition d'une (de) solution(s) lors de la production de corps formés cellulosiques, dans le cadre duquel on
(a) mélange de la cellulose et un aminoxyde à teneur en eau pendant la formation d'une suspension,
(b) forme par évaporation d'eau une solution de cellulose à partir de la suspension,
(c) extrude la solution de cellulose au moyen d'un entrefer dans un bain de coagulation, lequel contient une solution aqueuse d'aminoxyde et coagule ladite solution en des corps formés,
(d) fait passer les corps formés dans une solution de lavage aqueuse, dans laquelle les aminoxydes restants des corps formés sont lavés, et
(e) les solutions d'aminoxydes aqueuses des étapes (c) et/ou (d) sont ramenées après concentration à l'étape (a), à laquelle une propriété des solutions est mesurée et la composition des solutions est régulée sur la base de la valeur mesurée, **caractérisé en ce qu'**on mesure au moins une propriété non-optique desdites solutions et que l'on utilise le (les) écart(s) entre la valeur mesurée et la valeur mesurée d'une valeur de consigne prédéterminée pour réguler la (les) composition(s) de ladite (desdites) solution(s), dans lequel on sélectionne la propriété de la solution parmi les constantes diélectriques, la conductivité inductive, l'absorption de micro-ondes, l'épaisseur, la teneur en eau et la vitesse d'ultrasons.

2. Procédé selon la revendication 1, **caractérisé en ce qu'**on mesure la température de la solution au moment même ou peu avant ou après la mesure de la propriété et on pondère la valeur mesurée de la propriété au moyen de la mesure de température.

3. Procédé selon une des revendications 1 à 2, **caractérisé en ce qu'**on mesure la propriété en ligne.

4. Procédé selon une des revendications 1 à 3, **caractérisé en ce que**, pour réguler la composition de la solution, le dosage des composants intervient à l'étape (a), (c) ou (d).

5. Procédé selon une des revendications 1 à 4, **caractérisé en ce que**, pour réguler la composition de la solution, on intervient dans le protocole de traitement de l'étape (b) et/ou (e).

6. Dispositif pour mettre en oeuvre le procédé selon une des revendications 1 à 5, comportant
un broyeur (2) équipé d'un élément de dosage (1^{a}, 1^{b}),
un dispositif de dissolution et d'évaporation (3) connecté au broyeur (2),
un dispositif d'extrusion (4) raccordé par une conduite (8) au dispositif de dissolution et d'évaporation (3), connecté en aval d'un bain de coagulation (5),
au moins un bain de lavage, lequel contient une solution d'aminoxydes aqueuse délayée, et
des dispositifs pour mesurer une propriété de la (des) solution(s) afin de contrôler sa composition,
**caractérisé en ce qu'**un outil (9,21,22) de mesure d'une propriété non-optique de la solution est disposé dans la conduite (8,19,24) ou dans un récipient, laquelle, respectivement lequel, contient la solution à contrôler, et **en ce que** l'outil de mesure forme conjointement avec les éléments de dosage raccordés en aval (1^{a},1^{b} ;17) ou les dispositifs d'évaporation (3 ;20) des systèmes de commande (13,14,15 ;18 ;23) pour réguler la composition de la solution.

7. Dispositif selon la revendication 6, **caractérisé en ce que** l'outil de mesure (9, 11, 21) comprend un outil pour mesurer la température de la solution et une compensation de température de la valeur mesurée par l'outil.
